# FASCICULE DE BREVET EUROPEEN

(11) **EP 2 700 770 B1**
(45) Date de publication et mention de la délivrance du brevet: **30.05.2018**
(21) Numéro de dépôt: 13180956.8
(22) Date de dépôt: 20.08.2013
(51) Int. Cl.: E04H 6/10, E04B 1/24

(54) **ÉLÉMENT DE STRUCTURE PORTEUR D'UN PLANCHER POUR UNE INSTALLATION À OSSATURE MÉTALLIQUE DE STATIONNEMENT DE VÉHICULES ÉVOLUTIVE**
TRAGENDES ELEMENT FÜR DEN BODEN EINES PARKHAUSES, DESSEN METALLSKELETTTRAGWERK ERWEITERBAR IST
BEARING STRUCTURE ELEMENT OF A FLOOR FOR AN UPGRADEABLE STRUCTURE WITH A METAL FRAMEWORK FOR PARKING VEHICLES

(30) Priorité: 20.08.2012 FR 1257871
(43) Date de publication de la demande: 26.02.2014
(73) Titulaire: Duplipark France SAS, 13857 Aix en Provence 3 (FR)
(72) Inventeur: Ohnheiser, Olivier, 13100 Aix en Provence (FR)
(74) Mandataire: Chevalier, Renaud Philippe

(56) Documents cités:
- EP-A1- 2 093 352
- JP-A- H05 280 212
- US-A1- 2004 221 521

## Description

La présente invention se rapporte à un élément de structure porteur d'un plancher pour une installation à ossature métallique, notamment pour le stationnement de véhicules, à une installation à ossature métallique comprenant un tel élément de structure porteur, à un procédé de montage d'une telle installation et également à un procédé de rehaussement - par ajout d'un ou plusieurs étages successifs - d'une telle installation.

L'invention se situe dans le domaine des installations à ossature métallique, et en particulier à de telles installations pour le stationnement de véhicules, généralement appelées parcs de stationnement en structure métallique ou mixte, et dont les avantages sont bien connus par rapport aux parkings à structure en béton : préfabrication des éléments de structure en usine, montage rapide sur site qui réduit la perturbation pour les utilisateurs, absence de fondations dans certains cas, réduction des coûts, flexibilité dans le design de la structure, adaptabilité à la configuration du site de pose, en particulier dans des espaces contraints, etc.

De telles installations sont ainsi connues des documents EP 1 736 616 B1, EP 2 093 352 B1 et EP 0 622 507 B1

Le document EP 1 736 616 B1 divulgue un parc de stationnement modulaire comprenant des éléments de structure porteurs - ou éléments de support verticaux - d'une dalle de plancher, comprenant chacun une base fixée sur une extrémité inférieure d'un poteau tubulaire, et une tête de support du plancher fixée sur une extrémité supérieure du poteau. La base est pourvue d'une plaque sur laquelle est fixé un collier tubulaire recevant l'extrémité inférieure d'un poteau tubulaire. La tête comprend une première plaque formant chapiteau fixée sur l'extrémité supérieure du poteau, une seconde plaque fixée sur la première plaque avec un espacement vertical donné au moyen de systèmes vis/écrou, où une poutre de bord du plancher vient en appui sur cette deuxième plaque. Ce parc de stationnement est prévu pour monter un étage, voire plusieurs étages, lors de sa construction initiale.

Le parc de stationnement divulgué dans le document EP 1 736 616 B1 présente plusieurs inconvénients : la structure de ces éléments de support verticaux impose d'employer des barres de contreventement qui connectent de manière croisée deux éléments de support verticaux adjacents, avec une première barre de contreventement fixée sur la tête d'un premier élément de support vertical et sur la base d'un second élément de support vertical, et une seconde barre de contreventement fixée sur la base du premier élément de support vertical et sur la tête du second élément de support vertical. De telles barres de contreventement nuisent globalement à l'esthétique du parc de stationnement, sans compter la gêne induite pour les utilisateurs, lors des déplacements en véhicule, à pied ou lors de l'ouverture des portières des véhicules. En outre, la forme de ces bases impose l'application répétée de couches d'une peinture intumescente pour augmenter la tenue au feu du parc sans risque d'effondrement, de telles peintures intumescentes étant particulièrement coûteuses, en particulier dans les pays qui exigent un durée de tenue au feu réglementaire, comme par exemple en France avec une durée exigée de soixante minutes pour une structure à un étage. Enfin, ce type de parc modulaire est prévu pour monter un nombre d'étages prédéfini, lors de la phase de construction (avec notamment identification de l'étage final pour le recueil des eaux de pluie par exemple), et une fois le parc monté, il n'est plus possible de rajouter ultérieurement un nouvel étage si une saturation du parc est constatée, sauf à tout démonter et remonter un parc avec des étages supplémentaires.

Le document EP 2 093 352 B1 divulgue un parc de stationnement modulaire relativement similaire à celui du document EP 1 736 616 B1 sauf en ce que chaque élément vertical de support intègre une articulation à joint sphérique du poteau sur la base. Cependant, ce parc de stationnement présente les mêmes inconvénients : tenue au feu non spécifiée, nécessité d'employer des barres de contreventement, et impossibilité de rajouter après coup un étage supplémentaire de manière aisée et économique, autrement dit une fois que le parc est complètement terminé et utilisé.

Le document EP 0 622 507 B1 divulgue également un parc de stationnement comprenant un élément de structure porteur comprenant un poteau vertical dont l'extrémité inférieure prend appui sur un pied d'appui en béton armé qui comporte un logement sur le fond duquel repose une plaque d'appui pour le poteau, où le pied d'appui est pourvu d'un trou débouchant traversé par un corps de centrage enfoncé dans le sol. L'élément de structure porteur comporte également une tête composée de profilés en tôle pliée en sigma. Ce type de parc de stationnement ne permet pas non plus d'ajouter un étage supplémentaire, après usage, sans avoir à tout démonter, et il n'offre pas non plus une tenue au feu spécifiée garantissant de pouvoir se passer de peinture intumescente. En outre, et comme visible sur la figure 1 de ce document, ce parc de stationnement nécessite des barres de renfort sur plusieurs poteaux, formant des « V » de part et d'autres des poteaux en question, comparables aux barres de contreventement et avec donc les mêmes inconvénients en termes de mobilité des utilisateurs. US20040221521 A décrit un élément de structure porteur d'un plancher comme décrit dans le préambule de la revendication 1. La présente invention a pour but de résoudre en tout ou partie les inconvénients mentionnés ci-dessus, en proposant un élément de structure porteur qui permet de rajouter un étage supplémentaire à l'installation rapidement, simplement et à coût réduit, même après une durée significative d'utilisation de l'installation initialement montée.

Un autre but de l'invention est de proposer un élément de structure porteur qui permette de se passer de barres de contreventement ou autres barres de renfort qui s'étendent entre les poteaux.

Un autre but de l'invention est de proposer un élément de structure porteur qui utilisé au sein de l'installation, permette de spécifier une tenue au feu sans utilisation de peintures intumescentes.

A cet effet, elle propose un élément de structure porteur d'un plancher pour une installation à ossature métallique, notamment pour le stationnement de véhicules, comprenant un poteau métallique, une embase fixée sur une extrémité inférieure du poteau, et une tête pour le support du plancher fixée sur une extrémité supérieure du poteau, et :
- une pièce d'attente fixée sur la tête de support et pourvue de moyens de fixation d'un élément de structure porteur supérieur, pour notamment permettre le montage d'un plancher supérieur ; et
- la pièce d'attente comporte un corps fixé sur la tête et prolongé par une platine, et les moyens de fixation comprennent soit des orifices ménagés sur la platine pour le passage de vis, soit des vis solidaires de la platine, et
- l'élément de structure porteur comporte en outre
- une pièce de réservation amovible recouvrant au moins partiellement ladite pièce d'attente, où ladite pièce de réservation se présente sous la forme d'un couvercle amovible qui chapeaute la platine de la pièce d'attente.

De cette manière, il est possible de rajouter un étage supplémentaire sans avoir à tout démonter, en mettant en oeuvre le procédé de rehaussement décrit ci-après ; la pièce de réservation permettant de protéger la pièce d'attente après la pose complète du plancher, et la pièce d'attente étant conformée pour la fixation d'un poteau supplémentaire sur l'élément de structure porteur. Ainsi, l'installation est évolutive en permettant de rajouter un ou plusieurs étages après coup (après une période d'utilisation de l'installation), sans avoir à démonter l'installation, en permettant de s'adapter à l'utilisation du parc (en particulier en cas de saturation répétée), et en offrant la possibilité de répartir les coûts de réalisation des places de stationnement sur plusieurs années. Grâce à l'invention, il n'est donc plus nécessaire de réaliser dès le début une installation coûteuse, notamment du type parc de stationnement, avec plusieurs étages, ou une installation sous dimensionnée avec un seul étage figé, on peut désormais réaliser une installation, avec un étage puis, plusieurs mois ou années après, rehausser l'installation en ajoutant un étage supplémentaire de façon aisée et économique.

La pièce de réservation permet de réaliser une couche de roulement complète pour le plancher.

Selon une caractéristique, la pièce d'attente comporte un corps fixé sur la tête et prolongé par une platine, et les moyens de fixation comprennent soit des orifices ménagés sur la platine pour le passage de vis, soit des vis solidaires de platine, notamment par soudage. Ainsi, l'élément de structure porteur supérieur peut présenter une platine à son extrémité inférieure qui sera fixée sur la platine de la pièce d'attente par boulonnage.

En variante, la pièce d'attente comporte un corps creux ouvert sur le dessus et pourvu d'un fond fixé sur la tête pour un montage par emboîtement de l'élément de structure porteur supérieur à l'intérieur ou autour dudit corps creux, et les moyens de fixation comprennent soit des orifices ménagés sur le fond pour le passage de vis de fixation soit des vis solidaires dudit fond. Ainsi, l'élément de structure porteur supérieur peut présenter une extrémité inférieure qui est encastrée à l'intérieur ou autour du corps creux de la pièce d'attente et vissée sur son fond.

Dans les deux cas, le corps de la pièce d'attente s'étend sur une hauteur prédéfinie, qui correspondra sensiblement à l'épaisseur de la dalle de compression du plancher, pour que la pièce de réservation arrive au niveau de cette dalle de compression qui sera éventuellement recouverte complètement par une couche de roulement.

Selon une autre caractéristique, la tête comporte des segments de poutre présentant chacun une âme et des ailes, et chaque segment de poutre comporte un moyen de liaison par encastrement avec une poutre de charpente ; ces poutres de charpente formant la charpente de soutien du plancher.

Ces segments de poutre sont assemblés en croix, en « T » ou en « L » en fonction de la localisation de l'élément de structure porteur dans l'installation (au centre, sur un bord, dans un coin). Par définition, une liaison par encastrement assure la liaison à la fois de l'âme et des ailes du segment de poutre avec la poutre de charpente concernée. Grâce à ces liaisons par encastrement, l'invention permet d'obtenir des liaisons hyperstatiques entre les têtes et les poutres de charpente qui assurent les reprises des efforts à la fois tranchant, fléchissant et normal, permettent au final de se passer de contreventement.

Ainsi, l'invention permet de réaliser une installation sans contreventement, en particulier dans une version à un étage sans fondation, ce qui apporte donc une grande aisance d'utilisation par rapport aux versions existantes posées au sol et dans lesquelles les barres de contreventement posent un problème esthétique en plus de gêner les utilisateurs dans leurs déplacements.

De manière avantageuse, chaque moyen de liaison par encastrement comporte chacun un flasque soudé au bout du segment de poutre concerné, ledit flasque comportant au moins deux lignes de trous pour une fixation par boulonnage sur la poutre de charpente correspondante.

L'emploi d'un tel flasque avec ces lignes de trou garantit une liaison par encastrement entre le segment de poutre et la poutre de charpente concernés.

Dans une réalisation particulière, le poteau est tubulaire, et éventuellement rempli d'un matériau de remplissage, tel que du béton.

Avantageusement, la pièce de réservation est constituée d'un couvercle à l'intérieur duquel est logée au moins partiellement la pièce d'attente ; une telle forme en couvercle étant pratique pour isoler la pièce d'attente et ainsi se réserver son utilisation si un étage supplémentaire est rajouté.

Dans un mode de réalisation particulier, l'embase comporte un sabot présentant un logement hémisphérique, et une rotule montée dans ledit logement hémisphérique et solidaire d'une tige fixée sur l'extrémité inférieure du poteau.

Utiliser une telle liaison rotule entre le poteau et l'embase permet de rattraper des défauts d'horizontalité ou de planéité du sol lors de la pose de l'élément de structure porteur, ce qui est particulièrement avantageux lorsqu'on rehausse l'installation conformément au procédé de rehaussement décrit ci-après car les défauts s'amplifient avec le nombre de niveaux.

De manière avantageuse, le sabot est monobloc.

L'emploi d'un sabot monobloc, de préférence en acier, est particulièrement avantageux pour augmenter la tenue au feu de l'embase et ainsi se passer de peinture intumescente. En effet, un tel sabot massif, ou d'un seul tenant, offrira une résistance à la chaleur accrue par rapport à des pièces d'articulation classiques.

Dans une réalisation avantageuse, la tige présente un filetage sur lequel est vissé un écrou solidaire de l'extrémité inférieure du poteau, permettant ainsi de réaliser un réglage vertical permettant de compenser des différences de niveau entre les différents éléments de structure porteurs.

L'invention se rapporte également à une installation à ossature métallique, notamment pour le stationnement de véhicules, du type comprenant un plancher supporté par plusieurs éléments de structure conformes à l'invention, ledit plancher comportant des espaces de réservation dans lesquels sont logés les pièces d'attente et de réservation des éléments de structure.

Selon une possibilité de l'invention, le plancher comporte une dalle de compression, les espaces de réservation étant ménagés dans la dalle de compression.

Avantageusement, le plancher comporte une couche de roulement, notamment en matériau bitumineux, recouvrant la dalle de compression et les espaces de réservation.

Ainsi, les espaces de réservation sont dissimulés par la couche de roulement, permettant une utilisation optimale de l'installation pendant une première durée, avant de réaliser un rehaussement de l'installation. Il sera possible ultérieurement de percer cette couche de roulement pour accéder aux pièces d'attente et ensuite monter un étage supplémentaire.

L'ensemble pièce d'attente/pièce de réservation s'étend de préférence sur la hauteur de la dalle de compression, de sorte que la pièce de réservation arrive au niveau de la dalle de compression, pour éviter d'avoir des creux une fois la couche de roulement posée.

Il est avantageux que le plancher comporte également un support métallique monté sur les têtes des éléments de structure porteur, et sur lequel sera posée ou coulée la dalle de compression.

Le support métallique peut se présenter sous la forme d'une ou plusieurs plaques de tôle, par exemple crénelées, la dalle de compression sous la forme d'une dalle en béton, de préférence en béton armé, puis éventuellement la couche de roulement vient recouvrir la dalle de compression. L'invention concerne aussi un procédé de montage d'une installation conforme à l'invention, comprenant une étape de pose de plusieurs éléments de structure conformes à l'invention, une étape de pose et de fixation de poutres de charpente entre les têtes des éléments de structure pour former avec les têtes une charpente de support d'un plancher, une étape de pose du plancher sur ladite charpente, en ménageant dans le plancher des espaces de réservation pour les pièces d'attente et de réservation des éléments de structure porteurs.

Dans une réalisation particulière, l'étape de pose du plancher consiste à réaliser une dalle de compression, notamment par coulage sur un support métallique ou par pose de dalles préformées, en prévoyant dans celle-ci des espaces de réservation pour lesdites pièces d'attente et de réservation, et à poser une couche de roulement qui recouvre à la fois la dalle de compression et les espaces de réservation.

L'invention se rapporte également à un procédé de rehaussement d'une installation conforme à l'invention, comprenant les étapes suivantes :
- accès aux espaces de réservation ;
- retrait des pièces de réservation des éléments de structure ;
- fixation d'éléments de structure porteurs supérieurs sur les pièces d'attente des éléments de structure porteurs.

Les éléments de structure porteurs supérieurs serviront ensuite à supporter un plancher supérieur, ou bien à titre d'exemple des éléments d'ombrage et/ou des modules photovoltaïques.

Dans le mode de réalisation décrit ci-dessus, l'étape d'accès aux espaces de réservation consiste à ménager un trou dans la couche de roulement pour accéder aux espaces de réservation.

D'autres caractéristiques et avantages de la présente invention apparaîtront à la lecture de la description détaillée ci-après, d'un exemple de mise en oeuvre non limitatif, faite en référence aux figures annexées dans lesquelles :
- la figure 1 est une vue schématique en perspective d'une installation conforme à l'invention, en illustrant uniquement l'ossature métallique sans le plancher ;
- la figure 2 est une vue schématique en perspective d'un premier élément de structure porteur conforme à l'invention ;
- la figure 3 est une vue schématique de côté et en coupe partielle d'une installation sur un étage intégrant le premier élément de structure porteur de la figure 2 ;
- la figure 4 est une vue schématique en perspective et en coupe partielle de la partie haute du premier élément de structure porteur en situation dans l'installation, avec le plancher ;
- la figure 5 est une vue identique à celle de la figure 4 lors d'une étape de perçage de la couche de roulement pour accéder à la pièce d'attente ;
- la figure 6 est une vue identique à celle des figures 4 et 5 lors d'une étape de fixation d'un élément de structure porteur supérieur sur la pièce d'attente du premier élément de structure porteur ;
- la figure 7 est une vue identique à celle de la figure 3 avec l'installation intégrant un étage supplémentaire ;
- les figures 8 à 10 sont des vues identiques à celles des figures 4 à 6 respectives, avec un second élément de structure porteur ;
- la figure 11 est une vue schématique en coupe transversale de la partie basse d'un élément de structure porteur conforme à l'invention ; et
- la figure 12 est une vue schématique en perspective de la partie basse de la figure 11.

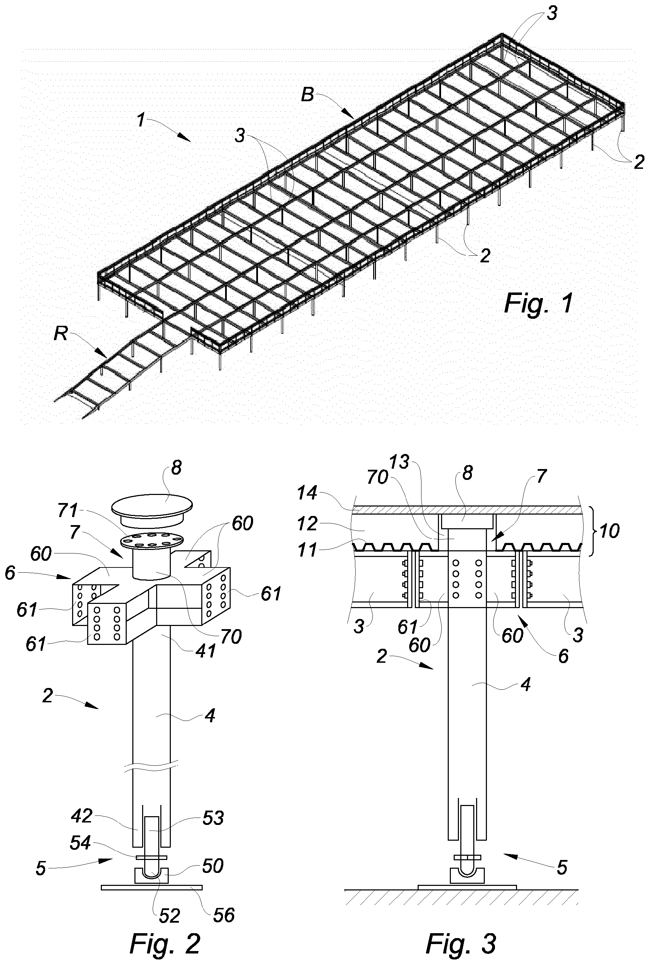

En référence à la figure 1, une installation 1 à ossature métallique de stationnement de véhicules évolutive et conforme à l'invention, comprend plusieurs éléments de structure porteurs 2 verticaux et ancrés sur le sol et répartis en rangée et en colonne, à intervalles réguliers, et des poutres de charpente 3 transversales et longitudinales fixées sur les éléments de structure 2 pour former une charpente de support d'un plancher (non illustré), avec au final des places de stationnement au rez-de-chaussée, sous le plancher et entre les éléments de structure porteurs 2, et des places de stationnement à l'étage sur le plancher. Cette installation 1 comprend également une ou plusieurs rampes R d'accès à l'étage et à armature métallique, et des barrières B de sécurité fixées sur les poutres de charpente 3 de bordure, étant également envisageable de prévoir un ou plusieurs escaliers (non illustrés) pour un accès piétonnier à l'étage.

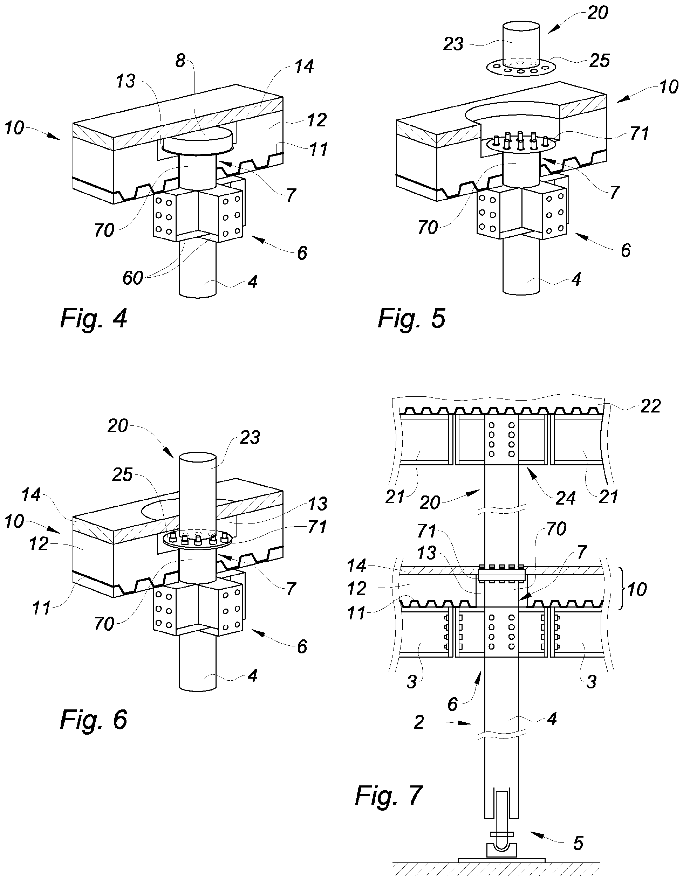

En référence aux figures 2 à 10, chaque élément de structure porteur 2 comprend :
- un poteau 4 vertical métallique présentant une extrémité supérieure 41 et une extrémité inférieure 42 opposée ;
- une embase 5 fixée sur l'extrémité inférieure 42 du poteau 4 ;
- une tête 6 de liaison aux poutres 3 et de support du plancher 10 fixée sur l'extrémité supérieure 41 du poteau 4 ;
- une pièce d'attente 7 fixée sur la tête 6, à l'opposée du poteau 4, et pourvue de moyens de fixation d'un élément de structure porteur supérieur 20 visible sur les figures 5 à 7 et 9 et 10, pour permettre le montage d'un plancher supérieur 22 visible uniquement dans l'exemple de la figure 7 ; et
- une pièce de réservation 8 à l'intérieur de laquelle est logée au moins en partie la pièce d'attente 7.

Le poteau 4 se présente sous la forme d'un profilé de forme générale tubulaire, notamment à section circulaire ou autre.

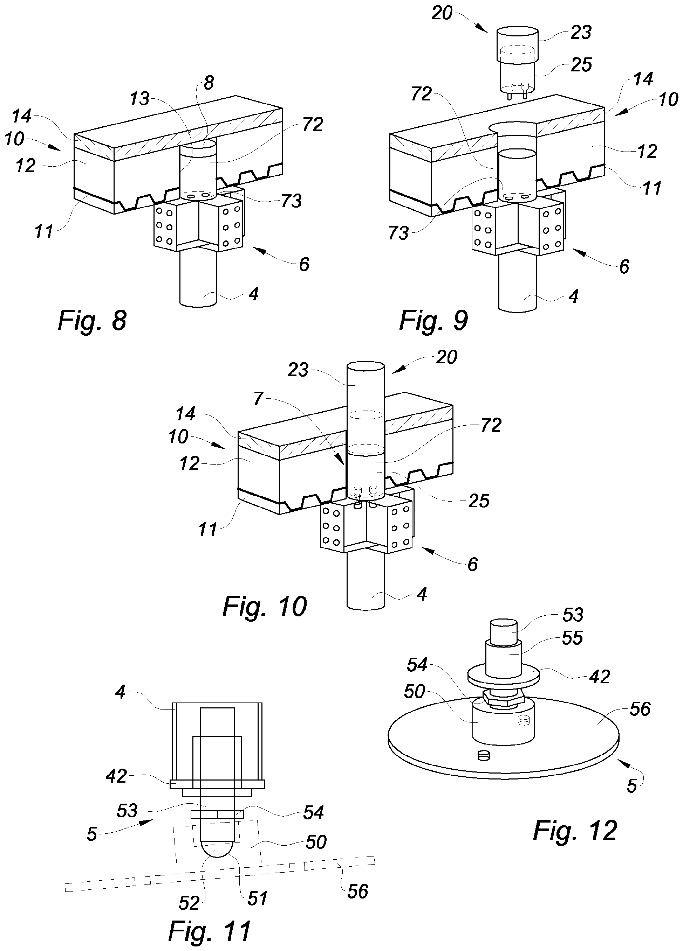

En référence aux figures 11 et 12, l'embase 5 comporte :
- un sabot 50 monobloc en acier présentant un logement 51 hémisphérique définissant une coupole ;
- une rotule 52 en forme d'hémisphère montée dans le logement hémisphérique 51, établissant ainsi une liaison rotule ;
- une tige filetée 53 fixée sur la rotule 52 et montée sur l'extrémité inférieure 42 du poteau 4 ; et
- un écrou de manutention 54 soudé sur la tige filetée 53 et disposé entre le sabot 50 et l'extrémité inférieure 42 du poteau 4, pour permettre de faire tourner la tige filetée 53 au moyen d'une clé adéquate ;
- un écrou de poteau 55 solidaire de l'extrémité inférieure 42 du poteau 4, et vissé sur une extrémité filetée de la tige 53 s'étendant à l'intérieur du poteau 4.

Ainsi, cette embase 5 permet de régler la hauteur de l'élément de structure porteur 2, en agissant sur l'écrou de manutention 54, et également de régler l'inclinaison ou la verticalité du poteau 4 grâce à la rotule 52 qui assure un rattrapage d'horizontalité de manière naturelle, dans le but notamment de rattraper des défauts de planéité ou d'horizontalité du sol.

Cette embase 5 peut également comporter une platine 56 sur laquelle est fixé le sabot 50, cette platine 56 étant ancrée éventuellement sur le sol. Le sabot 50 présente un diamètre supérieur à 12 centimètres, par exemple de l'ordre de 14 à 20 centimètres, et avec une hauteur supérieure à 7 centimètres, par exemple de l'ordre de 9 à 15 centimètres, et la tige filetée 53 présente un diamètre supérieure à 4 centimètres, par exemple de l'ordre de 4 à 8 centimètres.

Comme visible sur les figures 2 à 10, la tête 6 est composée d'un assemblage en croix « + » de quatre segments de poutre 60, notamment du type IPN, UPN, EPN, HEA ou HEB, chaque segment de poutre 60 présentant une extrémité libre sur laquelle est soudé un flasque 61 transversal percé selon deux lignes verticales de plusieurs trous pour permettre la fixation des poutres de charpente 3 sur les segments de poutre 60 par boulonnage. Ces têtes 6 sont adaptées pour les éléments de structure porteurs 2 situés à l'intérieur de l'installation 1.

Pour les éléments de structure porteurs 2 situés sur les bordures de l'installation 1, leurs têtes 6 sont composées respectivement d'un assemblage en « T » de trois segments de poutre 60 du même type que décrit ci-dessus. De même, pour les éléments de structure porteurs 2 situés dans les coins de l'installation 1, leurs têtes 6 sont composées respectivement d'un assemblage en « L » de deux segments de poutre 60 du même type que décrit ci-dessus. Dans les trois cas de figure, les segments de poutre 60 sont tous à angle droit et les têtes 6 sont fixées par soudure sur les extrémités supérieures 41 des poteaux 4.

Comme visible sur les figures 3 et 7, les poutres de charpente 3 sont de préférence du même type et de la même taille que les segments de poutre 60 employés pour les têtes 6 des éléments de structure porteurs 2, à ceci près que les poutres de charpente 3 sont de longueurs supérieures aux segments de poutre 60. Les poutres de charpente 3 présentent également des flasques transversaux percés à leurs deux extrémités libres, pour une fixation par boulonnage des poutres de charpente 3 sur les flasques 61 des segments de poutre 60.

Dans le mode de réalisation des figures 2 à 7, la pièce d'attente 7 comporte un corps 70 fixé sur le dessus de la tête 6, à l'opposé du poteau 4, et prolongé par une platine 71. Le corps 70 est aligné sur le poteau 4 et s'étend verticalement, ce corps 70 peut être du type profilé tubulaire du même type que le poteau 4, sauf que le corps 70 est relativement court comparé au poteau 4, et la platine 71 peut se présenter sous la forme d'un disque percé (exemple de la figure 2) ou muni de vis soudées (exemple des figures 5 et 6). La pièce de réservation 8 se présente sous la forme d'un couvercle amovible qui chapeaute la platine 71 de la pièce d'attente 7.

Dans les figures 8 à 10, la pièce d'attente 7 comporte un corps creux 72 présentant une extrémité supérieure ouverte et une extrémité inférieure fermée et pourvue d'un fond 73 fixé sur le dessus de la tête 6, à l'opposé du poteau 4. Des orifices traversant sont ménagés sur le fond 73 pour le passage de vis de fixation, ces orifices traversant étant par ailleurs accessibles par le dessous de la tête 6 pour permettre le boulonnage. La pièce de réservation 8 se présente sous la forme d'un couvercle amovible qui chapeaute l'extrémité supérieure ouverte du corps creux 72, à la manière d'un bouchon.

Le montage de l'installation 1 sur un étage s'effectue comme suit : les bases 5 sont posées ou éventuellement ancrées sur le sol, puis les poteaux 4 sont montées sur leurs bases 5, et les poutres de charpente 3 sont vissées entre les têtes 6 des éléments de structure porteurs 2 pour former avec les têtes 6 une charpente de support d'un plancher 10 ; un réglage en hauteur et en verticalité étant possible en agissant sur les écrous 54 et les rotules 52. Ensuite, le plancher 10 est mis en place sur la charpente métallique, ce plancher 10 comportant successivement :
- un support métallique 11 réalisé sous la forme de plaques de tôle crénelées fixées sur les poutres de charpente 3 et sur les têtes 6 des éléments de structure porteurs 2, ces plaques de tôle 11 étant préalablement percées pour le passage des pièces d'attente 7 ;
- une dalle de compression 12 réalisée sous la forme d'une dalle en béton, de préférence en béton armé, qui recouvre le support métallique 11, des espaces de réservation 13 étant ménagés dans la dalle de compression 12 pour accueillir les pièces d'attente et de réservation 7, 8 ; et
- une couche de roulement 14 éventuelle qui recouvre la dalle de compression 12 et les espaces de réservation 13.

Le rehaussement de cette installation 1, avec un rajout d'un étage supplémentaire, s'effectue comme suit, en référence aux figures 4 à 10 : des trous sont ménagés dans la couche de roulement 14 pour accéder aux espaces de réservation 13, les pièces de réservation 8 sont retirées, des éléments de structure porteurs supérieurs 20 sont fixés sur les pièces d'attente 7 des éléments de structure porteurs 2, des poutres supérieures 21 sont fixées entre les éléments de structure porteurs supérieurs 20 pour définir une charpente supérieure de support d'un plancher supérieur 22 est posé sur cette charpente supérieure.

Bien entendu, les poutres supérieures 21 peuvent être du même type que les poutres de charpente 3, et le plancher supérieur 22 peut être du même type que le plancher 10. Les éléments de structure porteurs supérieurs 20 comportent chacun un poteau 23, de préférence du même type que le poteau 4, une tête 24 fixée sur l'extrémité supérieure du poteau 23, de préférence du même type que la tête 6, et une embase 25 fixée sur l'extrémité inférieure du poteau 23. Ainsi, il est envisageable de prévoir un nouveau rehaussement de l'installation 1, en reprenant les mêmes étapes de rehaussement, pour l'ajout d'un autre étage supplémentaire. Dans ce cas, l'opération de rehaussement est faisable plusieurs fois.

Dans l'exemple des figures 4 à 7, l'embase 25 se présente sous la forme d'une platine percée. Cette platine 25 est fixée par boulonnage sur la platine 71 de la pièce d'attente 7.

Dans l'exemple des figures 8 à 10, cette embase 25 se présente sous la forme d'un corps tubulaire adapté pour être encastré à l'intérieur du corps creux 72, où ce corps tubulaire 25 présente un fond sur lequel sont soudées des vis qui viendront s'engager dans les orifices du fond 73 du corps creux 72.

## Revendications

1. Elément de structure porteur (2) d'un plancher (10) pour une installation (1) à ossature métallique, notamment pour le stationnement de véhicules, comprenant un poteau (4) métallique, une embase (5) fixée sur une extrémité inférieure (42) du poteau (4), une tête (6) pour le support du plancher (10) fixée sur une extrémité supérieure (41) du poteau (4), et une pièce d'attente (7) fixée sur la tête (6) et pourvue de moyens de fixation d'un élément de structure porteur supérieur (20), **caractérisé en ce que** la pièce d'attente (7) comporte un corps (70) fixé sur la tête (6) et prolongé par une platine (71), et les moyens de fixation comprennent soit des orifices ménagés sur la platine (71) pour le passage de vis, soit des vis solidaires de la platine (71), **et en ce que** l'élément de structure porteur (2) comporte en outre une pièce de réservation (8) amovible recouvrant au moins partiellement ladite pièce d'attente (7), où ladite pièce de réservation (8) se présente sous la forme d'un couvercle amovible qui chapeaute la platine (71) de la pièce d'attente (7).

2. Elément de structure porteur (2) selon la revendication 1, dans lequel la tête (6) comporte des segments de poutre (60) présentant chacun une âme et des ailes, et chaque segment de poutre (60) comporte un moyen de liaison par encastrement (61) avec une poutre de charpente (3).

3. Elément de structure porteur (2) selon la revendication 2, dans lequel chaque moyen de liaison par encastrement comporte chacun un flasque (61) soudé au bout du segment de poutre (60) concerné, ledit flasque (61) comportant au moins deux lignes de trous pour une fixation par boulonnage sur la poutre de charpente (3) correspondante.

4. Elément de structure porteur (2) selon l'une quelconque des revendications précédentes, dans lequel la pièce de réservation (8) est constituée d'un couvercle à l'intérieur duquel est logée au moins partiellement la pièce d'attente (7).

5. Elément de structure porteur (2) selon l'une quelconque des revendications précédentes, dans lequel l'embase (5) comporte un sabot (50) présentant un logement hémisphérique (51), et une rotule (52) montée dans ledit logement hémisphérique (51) et solidaire d'une tige (53) fixée sur l'extrémité inférieure (42) du poteau (4).

6. Elément de structure porteur (2) selon la revendication 5, dans lequel la tige (53) présente un filetage sur lequel est vissé un écrou (54) solidaire de l'extrémité inférieure (42) du poteau (4).

7. Elément de structure porteur (2) selon les revendications 5 ou 6, dans lequel le sabot (50) est monobloc.

8. Installation (1) à ossature métallique, notamment pour le stationnement de véhicules, comprenant un plancher (10) supporté par plusieurs éléments de structure porteurs (2) conformes à l'une quelconque des revendications précédentes, ledit plancher (10) comportant des espaces de réservation (13) dans lesquels sont logés les pièces d'attente et de réservation (7, 8) des éléments de structure porteurs (2).

9. Installation (1) selon la revendication 8, dans laquelle le plancher (10) comporte une dalle de compression (12), les espaces de réservation (13) étant ménagés dans la dalle de compression (12).

10. Installation (1) selon la revendication 9, dans laquelle le plancher (10) comporte une couche de roulement (14) recouvrant la dalle de compression (12) et les espaces de réservation (13).

11. Procédé de montage d'une installation (1) conforme à l'une quelconque des revendications 8 à 10, comprenant une étape de pose de plusieurs éléments de structure porteurs (2) conformes à l'une quelconque des revendications 1 à 7, une étape de pose et de fixation de poutres de charpente (3) entre les têtes (6) des éléments de structure porteurs (2) pour former avec les têtes (6) une charpente de support d'un plancher (10), une étape de pose du plancher (10) sur ladite charpente, en ménageant dans le plancher (10) des espaces de réservation (13) pour les pièces d'attente et de réservation (7, 8) des éléments de structure porteurs (2).

12. Procédé de rehaussement d'une installation (1) conforme à l'une quelconque des revendications 8 à 10, comprenant les étapes suivantes :
- accès aux espaces de réservation (13) ;
- retrait des pièces de réservation (8) des éléments de structure porteurs (2) ;
- fixation d'éléments de structure porteurs supérieurs (20) sur les pièces d'attente (7) des éléments de structure porteurs (2).

## Patentansprüche

1. Tragwerkelement (2) eines Decks (10) für eine Einrichtung (1) mit Metallgerüst, insbesondere zum Parken von Fahrzeugen, umfassend einen Metallpfosten (4), einen Sockel (5), der an einem unteren Ende (42) des Pfostens (4) fixiert ist, ein Kopfteil (6) zum Stützen des Decks (10), das an einem oberen Ende (41) des Pfostens (4) fixiert ist, und ein Bereitschaftsteil (7), das auf dem Kopfteil (6) fixiert ist und mit Mitteln zur Fixierung eines oberen Tragwerkelements (20) versehen ist, **dadurch gekennzeichnet, dass** das Bereitschaftsteil (7) einen Körper (70) aufweist, der auf dem Kopfteil (6) fixiert ist und von einer Platte (71) verlängert wird, und die Mittel zur Fixierung entweder Öffnungen umfassen, die auf der Platte (71) für den Durchgang von Schrauben eingerichtet sind, oder Schrauben, die mit der Platte (71) fest verbunden sind, und dadurch, dass das Tragwerkelement (2) ferner ein abnehmbares Aussparungsteil (8) aufweist, das mindestens teilweise das Bereitschaftsteil (7) bedeckt, wobei sich das Aussparungsteil (8) in Form eines abnehmbaren Deckels darstellt, der die Platte (71) des Bereitschaftsteils (7) abdeckt.

2. Tragwerkelement (2) nach Anspruch 1, wobei das Kopfteil (6) Trägersegmente (60) aufweist, die jeweils einen Steg und Flügel besitzen, und jedes Trägersegment (60) ein Mittel zur Steckverbindung (61) mit einem Gebälkträger (3) aufweist.

3. Tragwerkelement (2) nach Anspruch 2, wobei jedes Mittel zur Steckverbindung jeweils einen Flansch (61) aufweist, der an das Ende des jeweiligen Trägersegments (60) angeschweißt ist, wobei der Flansch (61) mindestens zwei Lochreihen für eine Fixierung an dem entsprechenden Gebälkträger (3) mittels Bolzenverbindung aufweist.

4. Tragwerkelement (2) nach einem der vorstehenden Ansprüche, wobei das Aussparungsteil (8) aus einem Deckel besteht, in dem mindestens teilweise das Bereitschaftsteil (7) untergebracht ist.

5. Tragwerkelement (2) nach einem der vorstehenden Ansprüche, wobei der Sockel (5) einen Klotz (50) aufweist, der einen halbkugelförmigen Sitz (51) besitzt, und ein Kugelgelenk (52), das in dem halbkugelförmigen Sitz (51) angebracht und fest mit einer Stange (53) verbunden ist, die an dem unteren Ende (42) des Pfostens (4) fixiert ist.

6. Tragwerkelement (2) nach Anspruch 5, wobei die Stange (53) ein Gewinde besitzt, auf dem eine Mutter (54) aufgeschraubt ist, die mit dem unteren Ende (42) des Pfostens (4) fest verbunden ist.

7. Tragwerkelement (2) nach Anspruch 5 oder 6, wobei der Klotz (50) einstückig ist.

8. Einrichtung (1) mit Metallgerüst, insbesondere zum Parken von Fahrzeugen, umfassend ein Deck (10), das von mehreren Tragwerkelementen (2) nach einem der vorstehenden Ansprüche gestützt wird, wobei das Deck (10) Aussparungsräume (13) aufweist, in denen die Bereitschafts- und Aussparungsteile (7, 8) der Tragwerkelemente (2) untergebracht sind.

9. Einrichtung (1) nach Anspruch 8, wobei das Deck (10) eine Druckplatte (12) aufweist, wobei die Aussparungsräume (13) in der Druckplatte (12) eingerichtet sind.

10. Einrichtung (1) nach Anspruch 9, wobei das Deck (10) eine Deckschicht (14) aufweist, die die Druckplatte (12) und die Aussparungsräume (13) bedeckt.

11. Verfahren zum Aufbauen einer Einrichtung (1) nach einem der Ansprüche 8 bis 10, umfassend einen Schritt des Anbringens mehrerer Tragwerkelemente (2) nach einem der Ansprüche 1 bis 7, einen Schritt des Anbringens und Fixierens von Gebälkträgern (3) zwischen den Kopfteilen (6) der Tragwerkelemente (2), um mit den Kopfteilen (6) ein Stützgebälk eines Decks (10) zu bilden, einen Schritt des Anbringens des Decks (10) auf dem Gebälk, indem in dem Deck (10) Aussparungsräume (13) für die Bereitschafts- und Aussparungsteile (7, 8) der Tragwerkelemente (2) eingerichtet werden.

12. Verfahren zum Erhöhen einer Einrichtung (1) nach einem der Ansprüche 8 bis 10, umfassend folgende Schritte:
- Zugang zu den Aussparungsräumen (13);
- Herausnahme der Aussparungsteile (8) der Tragwerkelemente (2);
- Fixierung von oberen Tragwerkelementen (20) auf den Bereitschaftsteilen (7) der Tragwerkelemente (2).

## Claims

1. A bearing structure element (2) of a floor (10) for a metal framework installation (1), in particular for the parking of vehicles, comprising a metal post (4), a base (5) fastened on a lower end (42) of the post (4), a head (6) for the support of the floor (10) fastened on an upper end (41) of the post (4), and a holding part (7) fastened on the head (6) and provided with means for fastening an upper bearing structure element (20), **characterized in that** the holding part (7) includes a body (70) fastened on the head (6) and extended by a plate (71), and the fastening means comprise either orifices formed on the plate (71) for the passage of screws, or screws secured to the plate (71), **and in that** the bearing structure element (2) further includes a removable reservation part (8) covering at least partially said holding part (7), where said reservation part (8) is in the form of a removable cover which caps the plate (71) of the holding part (7).

2. The bearing structure element (2) according to claim 1, wherein the head (6) includes beam segments (60) each having a core and wings, and each beam segment (60) includes a connection mean (61) for connecting by embedding with a structural beam (3).

3. The bearing structure element (2) according to claim 2, wherein each embedding connection mean includes a flange (61) welded to the tip of the concerned beam segment (60), said flange (61) including at least two lines of holes for a fastening by bolting on the corresponding structural beam (3).

4. The bearing structure element (2) according to any one of the preceding claims, wherein the reservation part (8) is constituted of a cover inside which the holding part (7) is housed at least partially.

5. The bearing structure element (2) according to any one of the preceding claims, wherein the base (5) includes a shoe (50) having a hemispherical housing (51), and a ball joint (52) mounted in said hemispherical housing (51) and secured to a rod (53) fastened on the lower end (42) of the post (4).

6. The bearing structure element (2) according to claim 5, wherein the rod (53) has a thread on which a nut (54) secured to the lower end (42) of the post (4) is screwed.

7. The bearing structure element (2) according to claim 5 or 6, wherein the shoe (50) is formed in one piece.

8. A metal framework installation (1), in particular for the parking of vehicles, comprising a floor (10) supported by several bearing structure elements (2) in accordance with any one of the preceding claims, said floor (10) including reservation spaces (13) in which the holding and reservation parts (7, 8) of the bearing structure elements (2) are housed.

9. The metal framework installation (1) according to claim 8, wherein the floor (10) includes a compression slab (12), the reservation spaces (13) being formed in the compression slab (12).

10. The metal framework installation (1) according to claim 9, wherein the floor (10) includes a surface layer (14) covering the compression slab (12) and the reservation spaces (13).

11. A method for mounting an installation (1) in accordance with any one of claims 8 to 10, comprising a step of installing several bearing structure elements (2) in accordance with any one of claims 1 to 7, a step of installing and fastening structural beams (3) between the heads (6) of the bearing structure elements (2) to form with the heads (6) a supporting structure of a floor (10), a step of installing the floor (10) on said structure, by forming in the floor (10) reservation spaces (13) for the holding and reservation parts (7, 8) of the bearing structure elements (2).

12. A method for enhancing an installation (1) in accordance with any one of claims 8 to 10, comprising the following steps:
- accessing the reservation spaces (13);
- removing the reservation parts (8) from the bearing structure elements (2);
- fastening upper bearing structure elements (20) on the holding parts (7) of the bearing structure elements (2).
